Europäisches Patentamt

European Patent Office

Office européen des brevets

(19)

(11) Veröffentlichungsnummer: **0 266 598 B1**

(12)

# EUROPÄISCHE PATENTSCHRIFT

(45) Veröffentlichungstag der Patentschrift: **09.02.94**

(51) Int. Cl.⁵: **H02P 7/63**

(21) Anmeldenummer: **87115130.4**

(22) Anmeldetag: **16.10.87**

(54) **Elektrischer Servoantrieb.**

(30) Priorität: **04.11.86 DE 3637480**
**04.11.86 DE 3637479**

(43) Veröffentlichungstag der Anmeldung:
**11.05.88 Patentblatt 88/19**

(45) Bekanntmachung des Hinweises auf die
Patenterteilung:
**09.02.94 Patentblatt 94/06**

(84) Benannte Vertragsstaaten:
**CH DE FR GB IT LI NL**

(56) Entgegenhaltungen:
**EP-A- 0 193 067        DE-A- 2 831 888**
**DE-A- 3 345 271        DE-B- 2 348 157**
**DE-B- 2 745 824        US-A- 3 781 616**

**PATENT ABSTRACTS OF JAPAN, Band 11,**
**Nr. 306 (E-546)(2753), 6. Oktober 1987 ; &**
**JP-A-62 100 191**

(73) Patentinhaber: **ROBERT BOSCH GMBH**
**Postfach 30 02 20**
**D-70442 Stuttgart(DE)**

(72) Erfinder: **Kennel, Ralph, Dr.-Ing.**
**Tannenweg 18**
**D-6120 Erbach(DE)**
Erfinder: **Meusel, Herbert, Dipl.-Ing.**
**Tannenweg 18**
**D-6120 Erbach(DE)**
Erfinder: **Hupe, Gerhard, Dipl.-Ing.**
**Finkenweg 29**
**D-6126 Kirchbrombach(DE)**
Erfinder: **Kunz, Olaf, Dipl.-Ing.**
**Siegfriedstrasse 32**
**D-6149 Fürth i. Odw.(DE)**

**Beschreibung**

Die Erfindung betrifft einen Servoantrieb nach dem Oberbegriff des Patentanspruches 1. Um robustere Servoantriebe zu erhalten, werden die herkömmlichen Gleichstrommaschinen immer häufiger durch bürstenlose Drehfeldmaschinen ersetzt. Üblich sind hierbei selbstgeführte Wechselrichter mit schnell schaltenden Transistoren, die z. B. impulsbreitenmoduliert angesteuert aus einem Gleichspannungszwischenkreis gespeist werden.

Der Leistungsbereich dieser Servoantriebe hängt von der Verlustleistung der verwendeten Leistungshalbleiter ab und wird durch den Leistungsbereich der verfügbaren Leistungshalbleiter eingeschränkt. Im Leistungsbereich von 5 bis 50 kW werden hierbei Wechselrichter mit bipolaren Transistoren verwendet, wobei Taktfrequenzen von 5 kHz bei Sperrspannungen von 1000 bis 1400 V möglich sind. Bei diesen Spannungen können die Transistoren mit Kollektorströmen bis zu 400 A belastet werden.

Zur Erreichung einer großen Leistung bei gleichzeitig geringer Oberwelligkeit ist aus der US-PS 3 781 616 der Vorschlag bekannt, die drei Phasenwicklungen eines Asynchronantriebs in Form zweier getrennter Wicklungssysteme auszuführen, welche gegeneinander um 30° versetzt angeordnet sind und von jeweils einem eigenen Umrichter gespeist werden. Die vorgeschlagene Anordnung gestattet es insbesondere, den Antrieb nach einer Störung in einen stabilen Betriebszustand zurückzuführen. Durch die gegeneinander versetzten Phasenwicklungssysteme wird erreicht, daß unerwünschte Oberwellen unterdrückt werden. Allerdings erzwingt die Ausführung der um 30° gegeneinander versetzten Phasenwicklungssysteme einen erheblichen Herstellungsaufwand.

Eine Vergrößerung des Leistungsbereiches einer Drehfeldmaschine ist ferner durch Parallelschaltung von mehreren Transistoren möglich, jedoch ergeben sich hierbei erhebliche Probleme, z. B. bezüglich der Stromaufteilung auf die einzelnen Halbleiter. Auch eine Erhöhung der Spannung des Gleichspannungszwischenkreises ist mit Schwierigkeiten und wesentlicher Erhöhung des Aufwandes verbunden, wie z. B. durch die hierbei erforderlichen hohen Isolationsspannungen, insbesondere zur Ansteuerungselektronik usw. Weiterhin ist es bei größeren Leistungen sinnvoll, die Spannung des Gleichspannungszwischenkreises der Netzspannung z. B. 3 x 380 V anzupassen, um hierdurch eine Versorgung ohne einen zusätzlichen Netztransformator zu ermöglichen.

Aus der DE-AS 27 45 824 ist es weiterhin bekannt, zwei Wechselrichter in Reihe zu schalten und den Strom gleichfalls in Reihe durch zwei getrennte Wicklungen in unterschiedlichen Phasenwicklungen einzuspeisen. Wollte man diese Schaltung zur Leistungserhöhung verwenden, müßte die Spannung im Gleichspannungszwischenkreis entsprechend erhöht werden, wobei die zuvor genannten Nachteile gemäß der Spannungserhöhung entstehen, die auch die Isolation der getrennten Wicklungen im Motor betrifft.

Zur Verringerung der Stromverdrängungsverluste ist es bei Drehfeldmaschinen mit größeren Phasenströmen ferner bekannt, siehe zum Beispiel DE-OS 28 31 888, eine Phasenwicklung in mehrere, gegeneinander isolierte Teilleiter aufzuteilen. Eine andere bekannte Art der Aufteilung in Teilleiter erfolgt z. B. dadurch, daß die Phasenwicklungen jeweils in zwei gegenüberliegenden Nutungsbereichen untergebracht sind und bei einer Dreiphasenwicklung das jeweils nächste Wicklungspaar für die nächste Phasenwicklung in Nutungsbereichen untergebracht sind, die 60° verdreht hiervon liegen. Bei Drehfeldmaschinen von 10 bis 40 kW und 3 x 380 V Wechselspannung sind dies häufig nur zwei Teilleiter, bei größeren Phasenströmen oder fertigungsbedingt, kann eine Aufteilung in eine größere Zahl Teilleiter sinnvoll sein. Diese Teilleiter sind bei den bekannten Drehfeldmaschinen üblicherweise mit ihren Enden am Wicklungskopf miteinander verbunden, wobei jeweils nur ein Verbindungsleiter zum Klemmbrett der Maschine herausgeführt ist. Diese Teilleiter lassen sich erfindungsgemäß ohne großen Mehraufwand einzeln oder durch zusammenfassen mehrerer Teilleiter in Strängen herausführen, wobei die Anzahl der herausgeführten Stränge denen der parallel zu schaltenden Wechselrichter entspricht.

Bei nach dem vorstehend beschriebenen Stand der Technik aufgebauten Antrieben können infolge der mit höherer Frequenz getakteten Wechselrichter neben der erwünschten Grundschwingung diese Schwingungen überlagernde Oberschwingungen auftreten, die zu unerwünschten Verlusten und - soweit diese unter 20 kHz liegen - auch zu störenden Geräuschen am Antrieb oder der Last führen. Weiterhin können störende hochfrequente Störstrahlungen entstehen, die über die Leistungskreise auf den Stromversorgungsteil zurückwirken und z. B. über die Netzzuleitungen abgestrahlt werden.

Um dies zu vermeiden, ist es bekannt, Tiefpaßfilter vorzusehen, die einen kleinen Widerstand für die Grundschwingung und einen großen Widerstand für die höherfrequenten Oberschwingungen aufweisen. Bei größeren Leistungen (über 10 kW) wird der Aufwand und Platzbedarf für derartige Filter jedoch meist unvertretbar groß. Weiterhin kann es bei Servoantrieben, die über einen großen Drehzahlbereich gesteuert werden, schwierig werden, das Filter so auszulegen, daß bei Antrieben z. B. mit einem Grundschwingungsbereich von 0 bis 500 Hz (Speisefrequenz des Motors) die Oberschwingungen durch die Taktung der Wechselrichter ausreichend gedämpft werden, ohne daß hierbei zu große Verluste im höherfrequenten Grundschwingungsbereich entstehen. Andererseits können bei der üblichen Impulsbreitenmodulation die Oberschwingungen im niedrigen Drehzahlbereich von einigen Hz in einem Bereich liegen, den die Grundfrequenz bei hohen Drehzahlen aufweist. Ein Filter ist dann bei kleinen Drehzahlen wirkungslos oder es stört den Betrieb bei hohen Drehzahlen. Eine wesentliche Erhöhung der Taktfrequenz der Wechselrichter ist wegen der Grenzfrequenz der verwendeten Bauelemente (Transistoren, GTO's) derzeit nicht möglich und/oder führt zu störenden Hochfrequenzstörstrahlungen und/oder erhöhten Umschaltverlusten.

Zur Verringerung der Drehmomentwelligkeit ist es bei selbstgeführten 6pulsigen Wechselrichter bekannt (siehe DE-PS 23 48 157 und DE-AS 27 45 824), mit einer großen Drossel im Zwischenkreis, durch zwei in Reihe geschaltete Wechselrichter, die an zwei Phasenwicklungssystemen mit je einer zusätzlichen Teilwicklung je Phase liegen, die Wirkung eines 12pulsigen Wechselrichters zu erzielen (größere Wirkung der Drossel, oberwellenarmes Drehmoment usw.). Bei Impulswechselrichtern, die mit Frequenzen von mehreren kHz getaktet werden, treten derartige Drehmomentenwelligkeiten nicht auf, da die mechanischen Teile für derart hohe Frequenzen zu träge sind.

Aufgabe der Erfindung ist es, einen Servoantrieb anzugeben, bei dem störende Geräusche am Antrieb und/oder der Last nicht auftreten, Verluste verringert sind und/oder hochfrequente Störstrahlungen leichter beseitigt werden können. Gleichzeitig soll durch die Parallelschaltung von Impulswechselrichtung die Leistung entsprechend der Anzahl der Wechselrichter vervielfacht werden können. Diese Aufgabe wird gelöst durch eine Anordnung mit den kennzeichnenden Merkmalen des Hauptanspruchs.

Der erfindungsgemäße Servoantrieb kann mit einem gesteuerten oder ungesteuerten Gleichspannungszwischenkreis ausgebildet werden, der alle oder mehrere Wechselrichter speist. Die Ansteuerung der Wechselrichter kann aus einer Ansteuerstufe erfolgen, wobei es sinnvoll ist, die gemeinsamen Ansteuersignale in jedem Teilwechselrichter durch eigene Treiberschaltungen verstärken zu lassen, um Einstreuungen auf die gemeinsamen Ansteuerleitungen zu unterdrücken. Der Erfindungsgegenstand läßt sich auch für alle hochdynamischen Antriebsregelungen wie z. B. mit feldorientierter Regelung unter Einsatz von Mikrorechnern verwenden. Beispiele solcher Anwendungen sind in dem Buch "Mikrocomputergeregelte Asynchronmaschinen" von D. Dietrich und W. Konhäuser, 1986 im Oldenbourg Verlag München zusammengefaßt. Weiterhin ist der Erfindungsgegenstand auch bei bürstenlosen Gleichstrommotoren bzw. selbstgesteuerten Synchronmaschinen, die ihr Drehfeld über einen Polradlagegeber selbst erzeugen (siehe z. B. DE-OS 31 20 559), anwendbar.

Die Wahl der Phasenverschiebung zwischen den einzelnen Wechselrichtern für eine Phasenwicklung hängt in erster Linie von der Anzahl der verwendeten Wechselrichter ab. Bei zwei Teilwicklungen und zwei Wechselrichtern je Phasenwicklung, ist eine Phasenverschiebung der Taktimpulse in der Nähe von 180 ° in den häufigsten Fällen besonders vorteilhaft. Der erfindungsgemäße Servoantrieb wird nachfolgend anhand von Ausführungsbeispielen näher erläutert. Es zeigen

Fig. 1               das Prinzipschaltbild der Leistungskreise eines erfindungsgemäßen Servoantriebes mit getrennnten Gleichspannungszwischenkreisen,
Fig. 2               die Leistungskreise mit gemeinsamen Gleichspannungszwischenkreis und
Fig. 3               ein Prinzipschaltbild mit Ansteuerstufen für die Wechselrichter.
Fig. 4 a und b      theoretische Betrachtungen einer Phasenwicklung und
Fig. 5 a bis d       die Erzeugung und den Verlauf der Ansteuersignale für Impulswechselrichter mit um 180 ° verschobener Taktung.

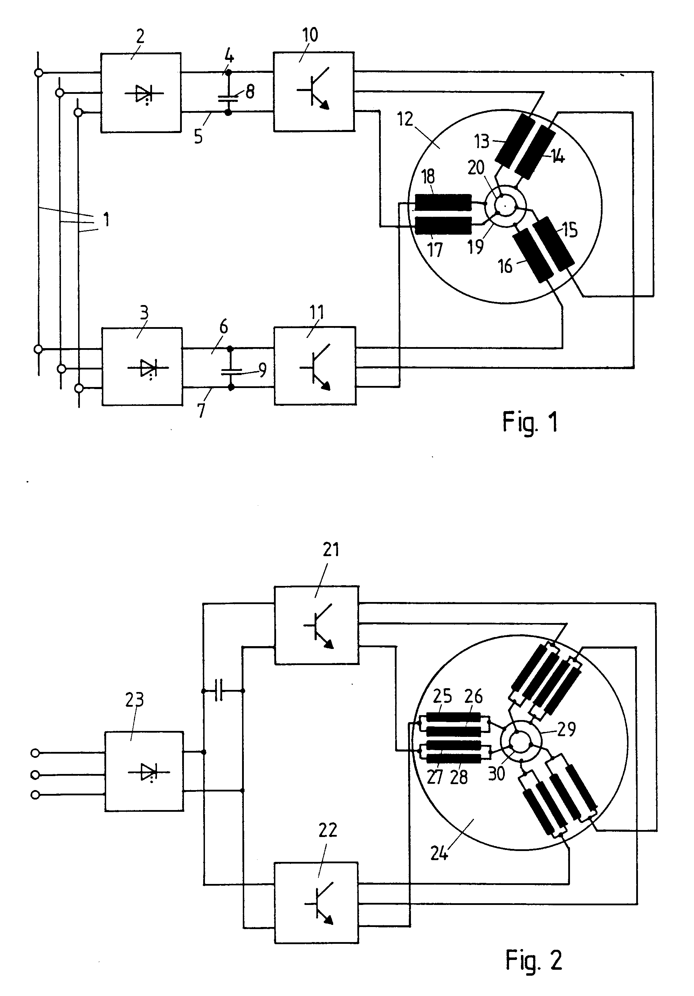

In Fig. 1 sind zwei getrennte z. B. direkt aus einem Netz 1 gespeiste Drehstromgleichrichterbrücken 2 und 3 vorgesehen, aus denen je eine Zwischenkreisgleichspannung über die Leitungen 4; 5 und 6; 7 je einen Kondensator 8; 9 sowie je einen Wechselrichter 10; 11 geführt ist. Jeder Wechselrichter erzeugt in bekannter Weise Phasenströme für das Drehfeld einer Drehfeldmaschine 12. Die Drehfeldmaschine 12 weist drei Phasenwicklungen auf, die jeweils in zwei getrennte, parallele Stränge 13; 14 und 15; 16 sowie 17; 18 aufgeteilt sind. Jeweils ein Strang 13; 15; 17 und 14; 16; 18 jeder Phasenwicklung ist zu einem Strangsystem in Sternschaltung zusammengeschaltet, wobei die Sternpunktverbindungen 19; 20 untereinander nicht verbunden sind. Jeder Strang 13 bis 18 kann aus einem oder mehreren Teilleitern einer Phasenwicklung bestehen, die in der Wicklung parallel miteinander oder in verschiedenen Nutungsbereichen, gegenseitig isoliert voneinander in bekannter Weise durch die Nuten geführt sind. Zur Steuerung oder Regelung der Drehfeldmaschine können gesteuerte oder ungesteuerte Gleichrichterbrücken 2; 3 verwendet werden und die Steuerung der Wechselrichter 10; 11 getrennt oder mit den gleichen Ansteuersignalen aus einer Ansteuerstufe erfolgen.

In Fig. 2 werden die beiden Wechselrichter 21 und 22 von einer einzigen Drehstromgleichrichterbrücke 23 gespeist. Die beiden Wechselrichter 21 und 22 liefern die Phasenströme für die in gleicher Weise wie in Fig. 1 geschaltete Drehfeldmaschine 24. Jede Phasenwicklung besteht hier aus jeweils vier Teilleitern 25 bis 28, wobei die Teilleiter 25 und 26 sowie die Teilleiter 27 und 28 zu einem Strang zusammengefaßt, d. h. mit ihren Enden verbunden sind.

Wird durch die Ansteuerung und den Aufbau der Wechselrichter 21 und 22 sichergestellt, daß an den Sternpunkten 29, 30 stets eine ausreichend gleiche Nullpunktspannung anliegt, können die Sternpunktenden aller Teilwicklungen auch untereinander verbunden sein, d. h. alle an einem Sternpunkt z. B. 29 liegen.

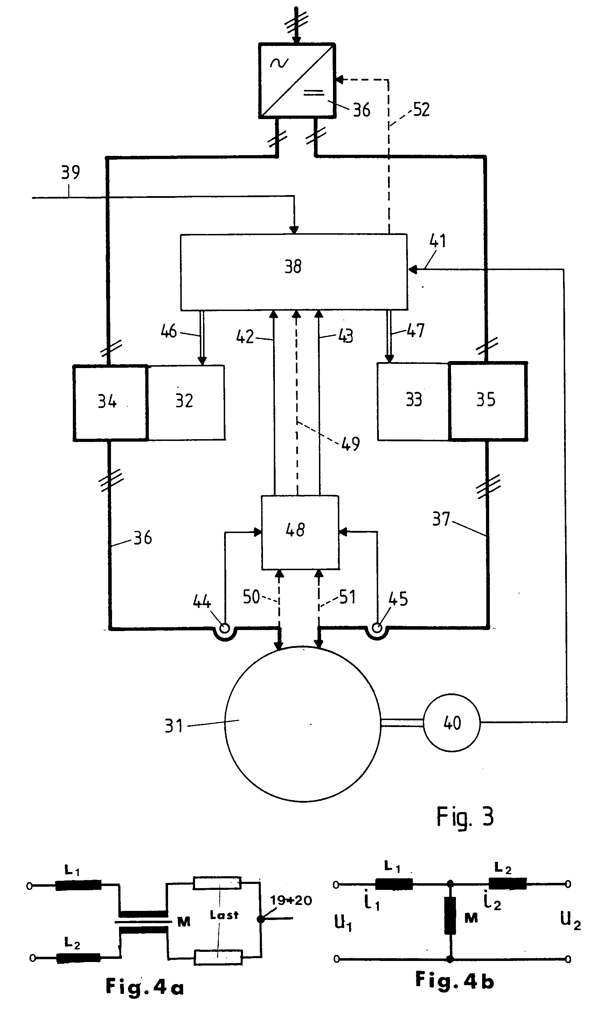

In Fig. 3 ist ein Steuerungsprinzip für die Drehfeldmaschine 31 näher dargestellt, wobei wie in Fig. 2 dargestellt die aus Treiberstufen 32; 33 und Leistungsstufen 34; 36 bestehenden Wechselrichtern 32; 34 und 33; 35 erzeugten Phasenströme sind über getrennte Leitungen 36 und 37 den einzelnen Strangsystemen (nicht dargestellt) der Drehfeldmaschine 31 zugeführt. Die Steuerung der Drehfeldmaschine erfolgt - in an sich bekannter Weise - über eine Steuerlogik 38, die von außen über eine Leitung 39 einen Sollwert erhält und der z. B. über einen Tachogenerator, Drehzahlgeber, Drehimpulsgeber oder Polradlagegeber 40 Drehwertsignale 41 zugeführt sind. Der Steuerlogik können auch Stromwertsignale 42; 43 z. B. aus Meßwandlern 44; 45 zugeführt sein. Aus diesen Werten erzeugt die Steuerlogik 38 Ansteuersignale 46; 47 für die Treiberstufen 32; 33, wobei es dem Fachmann überlassen bleibt aus der Vielzahl bekannter Steuerungsarten die günstigste auszuwählen. Die Ansteuersignale 46; 47, die in gemeinsamen Stufen erzeugt sein können, können z. B. noch einem oder zwei weiteren Wechselrichtern (nicht dargestellt) zugeführt werden, die in gleicher Weise einem oder zwei weiteren Strangsystemen der Drehfeldmaschine 31 Phasenströme zuführen, wenn die einzelnen Phasenwicklungen aus drei oder mehr Teilleitern bestehen bzw. in drei oder vier gleich starke Stränge aufgeteilt sind.

Handelt es sich bei der Drehfeldmaschine um eine Asynchronmaschine, die entsprechend einer feldorientierten Regelung z. B. über eine Impulsbreitenmodulation hoher Frequenz angesteuert wird, so genügt es, in zwei der drei Phasenwicklungen in einem Strangsystem Strommeßwandler vorzusehen und die gemessenen Werte entsprechend der Zahl der Strangsysteme zu vervielfachen. Es kann jedoch von Vorteil sein, die Ströme der zwei Phasenwicklungen in allen Strangsystemen zu erfassen und in einer Stufe 48 den entsprechenden Mittelwert zu bilden.

Bei der Mittelwertbildung können weiterhin größere Abweichungen in den Strömen der einzelnen Strangsysteme erfaßt werden, die bei einem Fehler entstehen können oder zur Überlastung eines der Wechselrichter führen könnten. Hierbei kann in der Stufe 48 ein Fehlersignal erzeugt werden, das dann z. B. über eine Leitung 49 der Steuerlogik 38 zugeführt wird, die dann weitere Ansteuersignale für die Treiberstufen 32; 33 sperrt.

Häufig werden bei Servoantrieben größerer Leistung zusätzliche Sicherheitseinrichtungen gefordert, die im Fehlerfall ein sofortiges Abschalten des Antriebes bewirken sollen. Hierzu kann in Weiterbildung der Erfindung eine Redundanzüberwachung z. B. in der Stufe 48 vorgesehen werden, die bei einer vorgegebenen Abweichung der Strom- und/oder Spannungswerte zwischen den einzelnen Strängen ein Abschalten oder falls erforderlich ein Abbremsen des Antriebes bewirkt. Der Redundanzschaltung können hierzu auch über die Leitungen 50; 51 alle erforderlichen Spannungen der einzelnen Strangsysteme zugeführt sein, die bei einem Fehler unterschiedliche Werte annehmen. Die Redundanz kann weiterhin dadurch erweitert werden, wenn für jedes Strangsystem (gemäß Fig. 1) völlig getrennte Leistungsstufen und erforderlichenfalls auch eine zusätzliche weitere Steuerlogik (38) verwendet wird.

Der Mehraufwand für die Drehfeldmaschine läßt sich verhältnismäßig klein halten, wenn hierfür handelsübliche Maschinen mit mehreren Teilleitern je Phasenwicklung verwendet werden. Die einzelnen Teilleiter können bei der Maschinenfertigung einzeln oder zu Strängen zusammengefaßt auf weitere oder ein vergrößertes Klemmbrett im Anschlußkasten oder weiteren Anschlußkästen herausgeführt werden. Vorteilhaft kann es auch sein, die Sternpunktenden in bekannter Weise derart auf getrennte Anschlüsse zu legen, daß mit Hilfe von Anschlußbrücken eine Schaltung im Stern oder Dreieck für unterschiedliche Phasenspannungen möglich ist. Da während des Betriebes die Spannungsunterschiede zwischen den einzelnen Teilleitern sehr klein gehalten werden können, reicht im allgemeinen die bei diesen Motoren vorgesehene Isolation zwischen den Teilleitern aus. Durch eine Überwachung der Spannungs- oder Stromunterschiede, wie oben ausgeführt, kann vermieden werden, daß sich ein Kurzschluß zwischen den Teilleitern ergibt oder gefahrbringend auswirken kann.

Zur Lösung der zusätzlichen Aufgabe, störende Geräusche am Antrieb und/oder der Last zu vermeiden, Verluste zu verringern und/oder hochfrequente Störstrahlung zu reduzieren bzw. leichter beseitigen zu können, erfolgt die Steuerung der Wechselrichter 10; 11 in Fig. 1 oder 21; 22 in Fig. 2 am sinnvollsten mit phasenverschobenen Ansteuersignalen aus einer gemeinsamen Ansteuerstufe.

In Fig. 4 a ist das Lastersatzschaltbild für eine Phase mit zwei Teilwicklungen dargestellt. Dieses Lastersatzschaltbild entspricht dem Ersatzschaltbild Fig. 4 b eines streuungsbehafteten Übertragers. Hierin sind $L_1$ und $L_2$ die Streuinduktivitäten der beiden Teilwicklungen, M die Kopplungsinduktivität zwischen diesen Wicklungen, die über ohmsche Lastanteile (Last) zu einem gemeinsamen Bezugspotential, dem

4

Sternpunkt 19 + 20 geführt sind.

Unter der Voraussetzung, daß die Spannungsoberschwingungen wegen der hohen Frequenz zum größten Teil an diesem Übertrager (Fig. 3 b) abfallen, gelten für den Zusammenhang zwischen Strömen und Spannungen folgende Gleichungen:

$$U_1 = L_1 \frac{di_1}{dt} + M \frac{di_2}{dt} \qquad (1)$$

$$U_2 = L_2 \frac{di_2}{dt} + M \frac{di_2}{dt} \qquad (2)$$

Obwohl es sich möglicherweise um einen nichtliniearen Übertrager handelt, kann man für stationäre Zustände Spannungen und Ströme in einzelne Frequenzen zerlegen.

Für jede einzelne Frequenz gelten dann die Gleichungen (3) und (4), wobei die Induktivitäten $L_1$ ; $L_2$ und M bei unterschiedlichen Frequenzen und unterschiedlichen Lastzuständen auch unterschiedliche Werte annehmen können.

$$U_1 = j\omega L_1\, I_1 + j\omega M I_2 \qquad (3)$$

$$U_2 = j\omega L_2\, I_2 + j\omega M I_1 \qquad (4)$$

Setzt man die Gleichung (4) in die Gleichung (3) ein, erhält man:

$$(U_1 - \frac{I_2}{I_1} \cdot U_2) = j\omega L_1 \cdot I_1 - j\omega L_2 \cdot I_2 \cdot \frac{I_2}{I_1} \qquad (5)$$

Unter Berücksichtigung der Tatsache, daß die parallelen Teilwicklungen der Phasenwicklung gleich aufgebaut sind ($L_1 = L_2 = L$), kommt man zur Gleichung (6)

$$(U_1 - \frac{I_2}{I_1} \cdot U_2) = j\omega L_1 \cdot (I_1 - \frac{I_2}{I_1} \cdot I_2) \qquad (6)$$

Für die erfindungsgemäße gleichphasige Grundschwingung gilt hierbei

$$U_{10} = U_{20} = U_0 \qquad (7)$$

$$U_{10} = I_{20} = \frac{I_0}{2} \qquad (8)$$

Setzt man diese beiden Gleichungen in die Gleichung (6) ein, so erhält man als wirksame Induktivität für die Grundschwingung:

$$U_0 = j\omega L \frac{I_0}{2} \qquad (9)$$

$$L_{\text{Teilwicklung}} = \frac{L}{2} \qquad (10)$$

Für die Umrichterschaltfrequenz und deren ungeradzahligen Harmonischen gilt bei einer Phasenverschiebung um ca. 180 °:

$$U_{1S} = - U_{2S} = U_S \qquad (11)$$

Setzt man diese Gleichung in die Gleichung (6) ein, erhält man folgenden Zusammenhang:

$$U_S = j \omega L \; I_{1S} \; \frac{I_{1S} - I_{2S}}{I_{1S} + I_{2S}} \tag{12}$$

Unter der Annahme, daß für die beiden Teilströme aus Symmetrieüberlegungen und wegen der Gleichung (11) gelten muß

$$I_{1S} = -I_{2S} \tag{13}$$

wird der Nenner es Bruches in Gleichung (12) zu Null. Für die wirksame Induktvität bei der Umrichterfrequenz gilt daher, daß die Gesamtinduktivität gegen unendlich geht. Die Schaltfrequenz und deren ungeradzahlige Harmonische können daher zum Laststrom keinen Anteil beitragen.

Die Ansteuersignale 46 und 47 für die Treiberstufen 32 und 33 der Impulswechselrichter gemäß Fig. 3 sind überlicherweise Rechteckimpulse, die entsprechend eines über die Leitung 39 vorgegebenen Sollwertes und anderer der Steuerlogik zugeführten Signale, in bekannter Weise ein impulsbreitenmoduliertes Durchschalten der Zwischenkreisspannung an die einzelnen Phasenwicklungen der Wechselstrommaschine bewirken. Die Schaltfrequenz wird dabei so groß gewählt (mehrere kHz), daß sich an den Phasenwicklungen ein gewünschter Spannungsverlauf ergibt, dessen Phasenlage im wesentlichen unabhängig ist von der Phasenlage der Oberschwingungen durch die Impulstaktung. Die Steuerlogik 38 erzeugt hierzu bei einer Dreiphasen-Drehstrommaschine für einen Vierquadrantenantrieb für jedes Teilwicklungssystem - in an sich bekannter Weise - z. B. von einer positiven auf eine negative Spannung umschaltenden Schaltspannungen, welche über die Treiberstufen 32 und 33, die jeweils mit sechs Leistungstransistoren bestückten Leistungsstufen 34 und 35 schalten.

Gemäß einer Weiterbildung der Erfindung erfolgt nun das Schalten der Leistungsstufen so, daß sich jeweils ein phasenverschobenes Schalten zwischen den Teilwicklungen einer Phasenwicklung ergibt. Hierzu erzeugt die Steuerlogik 38 für jede Teilwicklung einer Phasenwicklung ein Ansteuersignal (in 46), das über den Impulswechselrichter 32; 34 eine Teilwicklung in Schaltfrequenz an die Zwischenkreisspannung legt und jeweils ein weiteres, hierzu phasenverschobenes Ansteuersignal (in 47), das über den Impulswechselrichter 33; 35 die jeweilige andere Teilwicklung der gleichen Phasenwicklung phasenverschoben in Schaltfrequenz an die Zwischenkreisspannung legt.

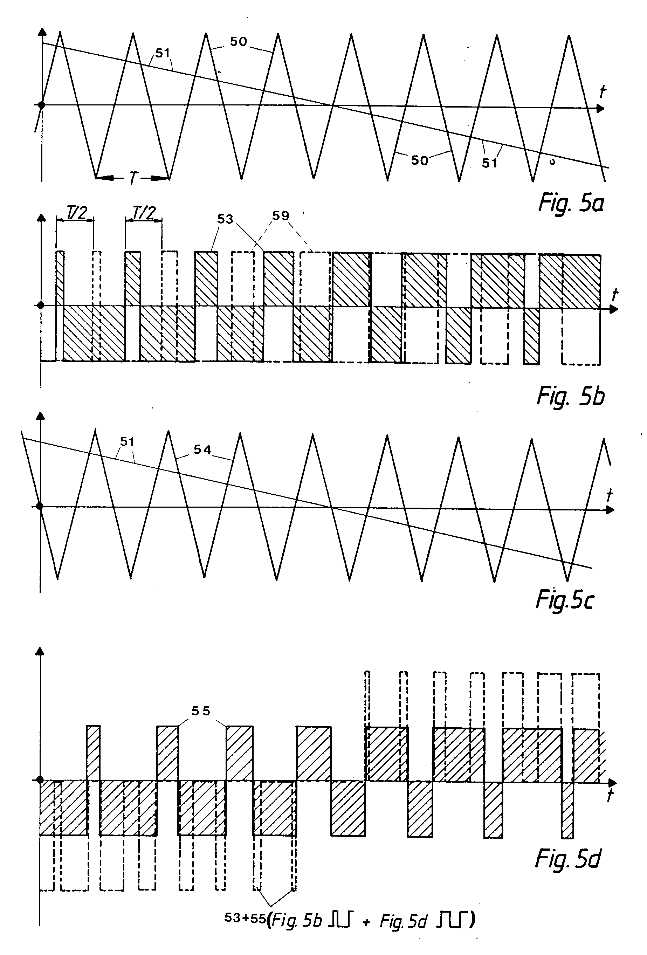

Werden die Ansteuersignale nach dem bekannten Unterschwingungsverfahren, durch Vergleich eines Spannungsreferenzsignales mit einem Dreiecksignal aus einem Komparator gebildet, kann wie in Fig. 5 dargestellt eine Phasenverschiebung um ca. 180 ° durch die Verwendung von zwei gleichen, jedoch jeweils um 180 ° phasenverschobenen Dreiecksignalen erfolgen. In Fig. 5 a ist ein Dreiecksignal 50 und ein Spannungsreferenzsignal 51 dargestellt, durch die über einen Spannungsvergleich immer dann ein positives Ansteuersignal 53 gemäß Fig. 5 b erzeugt wird, wenn der Momentanwert des Dreiecksignales 50 positiver ist als das Spannungsreferenzsignal 51. In einem weiteren Spannungsvergleich wird dar gleiche Spannungsreferenzsignal 51 mit einem um 180 ° phasenverschobenen (negierten) Dreiecksignal 54 gemäß Fig. 5 c verglichen und in gleicher Weise ein zweites Ansteuersignal 55 gemäß Fig. 5 d erzeugt, das bei konstantem Spannungsreferenzsignal um 180 ° gegenüber dem Ansteuersignal 53 in der Phase verschoben ist. Wird für den Wechselstrommotor ein sinusförmiger Wechselstrom erforderlich, kann das Spannungsreferenzsignal einen entsprechenden sinusförmigen Verlauf aufweisen.

Zur Phasenverschiebung der Ansteuersignale kann auch eine Verzögerung des Ansteuersignales 53 herangezogen werden, wie dies in Fig. 5 b gestrichelt dargestellt ist. Dort wird das zweite Ansteuersignal 59 durch eine Verzögerung des ersten Ansteuersignales 53 um eine halbe Schaltperiode T/2 erstellt. Diese Verzögerung kann wahlweise über analoge Schaltungen, digitale Zähler, Schieberegister usw. realisiert werden. Die Erstellung weiterer Ansteuersignale über Verzögerungsstufen kann vor allem dann sinnvoll sein, wenn mehr als zwei Impulswechselrichter erfindungsgemäß parallel geschaltet werden sollen. So kann zur Ansteuerung von drei Wechselrichtern, das zweite und dritte Ansteuersignal durch eine Verzögerung um 1/3 T und 2/3 T erstellt werden.

Durch die Wirkung der Gegenkopplung wird auch die Rückwirkung auf das gemeinsame Netz bzw. einen gemeinsamen Gleichrichter stark reduziert. Aus der Addition der Ansteuersignale 53 und 55, wie sie in Fig. 5 d gestrichelt dargestellt ist, läßt sich erkennen, daß die verbleibende Rückwirkung mit wesentlich höherer Frequenz erfolgt, die sich durch Kondensatoren im Gleichspannungszwischenkreis leichter ausgleichen läßt. In gleicher Weise läßt sich auch die Hochfrequenzstörstrahlung verringern. Diese macht sich besonders störend an den Netzzuleitungen bemerkbar, da die übrigen Teile üblicherweise in einem die Hochfrequenz gut abschirmenden Gehäuse liegen. Durch die erfindungsgemäße Schaltung verringert sich die Leistung der Störstrahlung und das Maximum verlagert sich zu höheren Frequenzen. Diese lassen sich durch die Verwendung induktionsarmer Kondensatoren und erforderlichenfalls weniger aufwendiger Hochfrequenzfilter in der Netzzuleitung soweit reduzieren, daß sie unter den geforderten Grenzwerten für Hochfrequenzstörstrahlung liegen.

**Patentansprüche**

1.  Elektrischer Servoantrieb mit mehrphasiger Drehfeldmaschine größerer Leistung, die über einen wenigstens zwei Wechselrichter aufweisenden Gleichspannungszwischenkreis-Umrichter gespeist wird, wobei die Wechselrichter mittels pulsbreitenmodulierter Ansteuersignale derart gesteuert werden, daß sich in den Phasenwicklungen ein gewünschter Spannungsverlauf ergibt, dadurch gekennzeichnet, daß
    - die Phasenwicklungen der Drehfeldmaschine (12, 24) aus jeweils wenigstens zwei parallel angeordneten, gleich starken und gegeneinander isolierten Teilleitern (13 bis 18, 25 bis 28) bestehen, die mit einem weitgehend gleich großen Fluß verkettet sind,
    - die Teilleiter durch annähernd gleich große Gegeninduktivitäten miteinander gekoppelt sind,
    - die Teilleiter (13 bis 18) zumindest mit einem Ende isoliert voneinander aus der Drehfeldmaschine (12, 24) herausgeführt sind,
    - die Teilleiter (13 bis 18) zu wenigstens zwei Strangsystemen zusammengeschaltet sind,
    - den Strangsystemen jeweils getrennte, parallel betriebene Wechselrichter-Leistungsstufen (10, 11, 21, 22) zugeordnet sind, welche den Strangsystemen gleichartige Phasenströme zuführen, wobei
    - die Ansteuersignale (46, 47) der Wechselrichter-Leistungsstufen (10, 11, 21, 22) derart gegeneinander phasenverschoben sind, daß die Grundschwingungen der Wechselrichterausgangs-Spannungen in den Teilleitern (zum Beispiel 13, 14) der jeweiligen Phasenwicklung (13 + 14) den gleichen Phasenwinkel, die Oberschwingungen durch die Impulstaktung der Impulswechselrichter (10, 11) dagegen einen stark unterschiedlichen Phasenwinkel aufweisen.

2.  Servoantrieb nach Anspruch 1, dadurch gekennzeichnet, daß die Wechselrichter (34, 32 und 33, 35) über einen ungesteuerten oder mit gleichen Signalen gesteuerten Gleichspannungszwischenkreis direkt aus dem Netz gespeist werden.

3.  Servoantrieb nach einem der Ansprüche 1 oder 2, dadurch gekennzeichnet, daß die Wechselrichter (34, 35) getrennt voneinander aufgebaut sind und jeder Wechselrichter eigene Treiberschaltungen (32; 33) aufweist.

4.  Servoantrieb nach einem der Ansprüche 1 bis 3, dadurch gekennzeichnet, daß den Treiberschaltungen (32, 33) der Wechselrichter impulsbreitenmodulierte Ansteuersignale (46; 47) zugeführt werden, die in den - in Stränge aufgeteilten - Phasenwicklungen Phasenströme gleicher Amplitude und Phasenlage erzeugen.

5.  Servoantrieb nach einem der Ansprüche 1 bis 4, dadurch gekennzeichnet, daß die Drehfeldmaschine (24) ein handelsüblicher Kurzschlußläufer mit drei Phasenwicklungen ist, die aus gegeneinander isolierten Teilleitern (25 bis 28) bestehen und die Teilleiter zwei gleich starke in gleicher Weise zusammengeschaltete, voneinander galvanisch getrennte Strangsysteme bilden, die jeweils mit den Ausgängen eines Wechselrichters (21; 22) verbunden sind.

6.  Servoantrieb nach einem der Ansprüche 1 bis 5, dadurch gekennzeichnet, daß die gegeneinander isolierten Teilleiter (25 bis 28) in einzelnen Strängen mit beiden Enden auf getrennte Anschlüsse eines Maschinenanschlußkastens geführt sind.

7.  Servoantrieb nach einem der Ansprüche 1 bis 6, dadurch gekennzeichnet, daß die Ansteuersignale (46; 47) für die Wechselrichter nach dem Algorithmus der feldorientierten Regelung durch einen übergeordneten Mikrorechner erstellt werden.

8.  Servoantrieb nach einem der Ansprüche 1 bis 7, dadurch gekennzeichnet, daß die Erfassung der Phasenströme zur Erstellung und/oder Beeinflussung der Ansteuersignale für die Wechselrichter, jeweils nur in einem Strang der Phasenwicklungen erfolgt.

9. Servoantrieb nach einem der Ansprüche 1 bis 8, dadurch gekennzeichnet, daß die Erfassung der Phasenströme zur Erstellung und/oder Beeinflussung der Ansteuersignale für die Wechselrichter in mehr als einem Strang der Phasenwicklungen erfolgt und aus den erfaßten Werten Strommittelwerte für die Phasenströme gebildet werden.

10. Servoantrieb nach Anspruch 9, dadurch gekennzeichnet, daß die in den Strängen einer Phasenwicklung erfaßten Ströme einer Vergleichseinrichtung (48) zugeführt sind, die ein Fehlersignal (49) liefert, wenn die Stromabweichung eines Stranges von dem Strom eines anderen Stranges der gleichen Phasenwicklung einen vorgegebenen Wert überschreitet.

11. Servoantrieb nach einem der Ansprüche 1 bis 10, dadurch gekennzeichnet, daß die Spannungen an den einzelnen Strängen der Phasenwicklungen einer Redundanzüberwachungsschaltung zugeführt sind, die ein Fehlersignal liefert, wenn die Werte zwischen den Strängen einer Phasenwicklung eine festlegbare Abweichgrenze überschreiten.

12. Servoantrieb nach Anspruch 1, dadurch gekennzeichnet, daß bei n Teilwicklungen einer Phasenwicklung an den n Impulswechselrichter-Leistungsstufen eine Ansteuerung mit Impulsen erfolgt, die jeweils annähernd um den n-ten Teil von 360 ° in der Phase verschoben sind.

13. Servoantrieb nach einem der Ansprüche 1 oder 12, dadurch gekennzeichnet, daß die Impulswechselrichter mit einer Impulsbreitenmodulation nach dem Unterschwingungsverfahren gesteuert sind und eine Phasenverschiebung der Wechselrichterimpulse (53; 55) zwischen den Impulsen für die Teilwicklungen einer Phasenwicklung durch eine Invertierung des Komparatorreferenzsignales (50) erfolgt.

14. Servoantrieb nach einem der Ansprüche 1 oder 12, dadurch gekennzeichnet, daß eine Phasenverschiebung der Wechselrichterimpulse für die Teilwicklungen einer Phasenwicklung durch eine Verzögerung (T/2) der Ansteuersignale (53) über analoge Verzögerungsschaltungen, digitale Zähler oder Schieberegister erfolgt.

15. Servoantrieb nach einem der Ansprüche 1 oder 12 bis 14, dadurch gekennzeichnet, daß die Phasenverschiebung der Wechselrichterimpulse derart gewählt ist, daß ein Maximum der auf den Leistungseingang zurückwirkenden hochfrequenten Störstrahlung reduziert wird und/oder in einen Frequenzbereich verlagert wird in dem es weniger stört oder leichter auszufiltern ist.

16. Servoantrieb nach einem der Ansprüche 1 bis 15, dadurch gekennzeichnet, daß es sich um einen reaktionsschnellen über den vollen Drehzahlbereich steuerbaren Vierqauadranten-Antrieb größerer Leistung, insbesondere den Spindelantrieb einer numerisch gesteuerten Werkzeugmaschine handelt.

**Claims**

1. Electric servo-drive with polyphase rotating-field machine of relatively high power which is fed via a DC link-circuit converter exhibiting at least two inverters, the inverters being controlled by means of pulse-width modulated drive signals in such a manner that a desired voltage variation is obtained in the phase windings, characterized in that
   - the phase windings of the rotating-field machine (12, 24) consist of in each case at least two equally thick and mutually insulated component conductors arranged in parallel (13 to 18, 25 to 28) which are interlinked by means of a largely equally large flux,
   - the component conductors are coupled to one another by approximately equally large counter-inductances,
   - the component conductors (13 to 18) are brought out of the rotating-field machine (12, 24) insulated from one another with at least one end,
   - the component conductors (13 to 18) are connected together to form at least two phase systems,
   - in each case separate inverter power stages (10, 11, 21, 22) operated in parallel, which supply similar phase currents to the phase systems, being allocated to the phase systems, the drive signals (46, 47) of the inverter power stages (10, 11, 21, 22) being phase-shifted with respect to one another in such a manner that the fundamental oscillation of the inverter output voltages in

EP 0 266 598 B1

the component conductors (for example 13, 14) of the respective phase winding (13 and 14) having the same phase angle but the harmonics having a greatly different phase angle due to the pulse switching of the pulse inverters (10, 11).

2. Servo-drive according to Claim 1, characterized in that the inverters (34, 32 and 33, 35) are fed directly from the power system via an uncontrolled DC link circuit or one controlled with identical signals.

3. Servo-drive according to one of Claims 1 or 2, characterized in that the inverters (34, 35) are installed separately from one another and each inverter exhibits its own driver circuits (32; 33).

4. Servo-drive according to one of Claims 1 to 3, characterized in that the driver circuits (32, 33) of the inverters are supplied with pulse-width-modulated drive signals (46; 47) which generate phase currents of equal amplitude and phase angle in the phase windings divided into phases.

5. Servo-drive according to one of Claims 1 to 4, characterized in that the rotating-field machine (24) is a commercially available squirrel-cage rotor with three phase windings which consists of mutually insulated component conductors (25 to 28) and the component conductors form two equally thick phase systems which are kept DC-isolated from one another and are connected in the same manner and which are in each case connected to the outputs of one inverter (21; 22).

6. Servo-drive according to one of Claims 1 to 5, characterized in that mutually insulated component conductors (25 to 28) are conducted in individual phases with both ends to separate terminals of a machine terminal box.

7. Servo-drive according to one of Claims 1 to 6, characterized in that the drive signals (46; 47) for the inverters are generated by a higher-level microprocessor in accordance with the algorithm of the field-oriented control.

8. Servo-drive according to one of Claims 1 to 7, characterized in that, for generating and/or influencing the drive signals for the inverters, the phase currents are in each case only detected in one phase of the phase windings.

9. Servo-drive according to one of Claims 1 to 8, characterized in that, for generating and/or influencing the drive signals for the inverters, the phase currents are detected in more than one phase of the phase windings and average current values for the phase currents are formed from the detected values.

10. Servo-drive according to Claim 9, characterized in that the currents detected in the phases of a phase winding are supplied to a comparison device (48) which supplies a fault signal (49) when the current deviation of one phase from the current of another phase of the same phase winding exceeds a predetermined value.

11. Servo-drive according to one of Claims 1 to 10, characterized in that the voltages across the individual phases of the phase windings are supplied to a redundancy monitoring circuit which supplies a fault signal when the values between the phases of a phase winding exceed a predeterminable limit of deviation.

12. Servo-drive according to Claim 1, characterized in that, within n part-windings of a phase winding, a drive with pulses which are in each case approximately shifted by the nth part of 360° in phase is effected at the n pulse inverter power stages.

13. Servo-drive according to one of Claims 1 or 12, characterized in that the pulse inverters are controlled with a pulse width modulation in accordance with the subharmonics method and the inverter pulses (53; 55) are phase-shifted between the pulses for the part-windings of a phase winding by inverting the comparator reference signal (50).

14. Servo-drive according to one of Claims 1 or 12, characterized in that the inverter pulses for the part-windings of a phase winding are phase-shifted by a delay (T/2) of the drive signals (53) via analogue delay circuits, digital counters or shift registers.

9

**15.** Servo-drive according to one of Claims 1 or 12 to 14, characterized in that the phase shift of the inverter pulses is selected in such a manner that a peak of the radio-frequency interference radiation reacting on the power input is reduced and/or is displaced into a frequency range in which it is less disturbing or can be filtered out more easily.

**16.** Servo-drive according to one of Claims 1 to 15, characterized in that this is a fast-response four-quadrant drive of relatively high power, which can be controlled over the full speed range, particularly the spindle drive of a numerically controlled machine tool.

**Revendications**

**1.** Servo commande électrique comportant une machine à champ tournant, polyphasé, de puissance relativement importante, alimenté par au moins un convertisseur continu-continu à circuit intermédiaire à au moins deux onduleurs, les onduleurs étant commandés par des signaux de commande à modulation de largeur d'impulsion pour obtenir une courbe de tension souhaitée dans les enroulements de phase, caractérisée en ce que :
   - les enroulements de phase de la machine à champ tournant, (12, 24) se composent chaque fois d'au moins deux sous-conducteurs (13-18 ; 25-28) en parallèle, de même puissance et isolés les uns par rapport aux autres, et qui sont combinés à un flux pratiquement égal,
   - les sous-conducteurs sont couplés l'un à l'autre par des inductances mutuelles pratiquement de même importance,
   - les sous-conducteurs (13-18) sortent de la machine à champ tournant (12, 24) avec au moins une extrémité isolée,
   - les sous-conducteurs (13-18) sont réunis en au moins deux systèmes de branches,
   - aux systèmes de branches sont associés chaque fois des étages de puissance de redresseurs (10, 11, 21, 22) séparés, fonctionnant en parallèle, et qui fournissent aux systèmes de branches des courants de même phase,
   - les signaux de commande (46, 47) des étages de puissance à redresseurs (10, 11, 21, 22) sont déphasés les uns par rapport aux autres pour que les fréquences fondamentales des tensions de sortie des redresseurs dans les sous-conducteurs (par exemple 13, 14) de l'enroulement de phase respectif (13 + 14) possèdent le même angle de phase et que les harmoniques présentent par contre un angle de phase très différent du fait de la cadence impulsionnelle des redresseurs à impulsions (10, 11).

**2.** Servo commande selon la revendication 1, caractérisée en ce que les redresseurs (34, 32 et 33, 35) sont alimentés directement à partir du réseau par des circuits intermédiaires de tension continue, non commandés ou commandés par les mêmes signaux.

**3.** Servo commande selon l'une des revendications 1 ou 2, caractérisée en ce que les redresseurs (34, 35) sont réalisés séparément et chaque redresseur possède son propre circuit de commande (32, 33).

**4.** Servo commande selon l'une des revendications 1 à 3, caractérisée en ce que les circuits de commande (32, 33) des redresseurs reçoivent des signaux de commande (46, 47) à modulation de largeur d'impulsion qui génèrent dans les enroulements de phase, répartis en branches, des courants de phase, de même amplitude et de même déphasage.

**5.** Servo commande selon l'une des revendications 1 à 4, caractérisée en ce que la machine à champ tournant (24) est un rotor en court-circuit du commerce avec trois enroulements de phase composés de trois sous-conducteurs (25-28) isolés les uns des autres et les sous-conducteurs forment deux systèmes de branches de même importance, montés de la même manière et séparés galvaniquement, ces branches étant respectivement reliées aux sorties d'un redresseur (21, 22).

**6.** Servo commande selon l'une des revendications 1 à 5, caractérisée en ce que les sous-conducteurs (25-28), isolés les uns par rapport aux autres, passent dans des branches séparées avec les deux extrémités sur des bornes distinctes d'un boîtier de branchement de la machine.

**7.** Servo commande selon l'une des revendications 1 à 6, caractérisée en ce que les signaux de commande (46 ; 47) des redresseurs sont établis par un micro-calculateur principal selon l'algorithme de la régulation orientée en fonction du champ.

**8.** Servo commande selon l'une des revendications 1 à 7, caractérisée en ce que la détection des courants de phase pour établir et/ou influencer les signaux de commande des redresseurs ne se fait chaque fois que dans une branche des enroulements de phase.

**9.** Servo commande selon l'une des revendications 1 à 8, caractérisée en ce que la saisie des intensités de phase pour établir et/ou influencer les signaux de commande des redresseurs se fait dans plus d'une branche des enroulements de phase, et à l'aide des valeurs saisies on forme des valeurs moyennes de l'intensité pour les courants de phase.

**10.** Servo commande selon la revendication 9, caractérisée en ce que les courants détectés sur les branches d'un enroulement de phase sont fournis à un comparateur (48) qui fournit un signal d'erreur (49) lorsque la différence de courant d'une branche, par rapport au courant d'une autre branche du même enroulement de phase, dépasse une valeur prédéterminée.

**11.** Servo commande selon l'une des revendications 1 à 10, caractérisée en ce que les tensions des différentes branches des enroulements de phase sont appliquées à un circuit de surveillance de redondance qui fournit un signal d'erreur lorsque les valeurs entre les branches d'un enroulement de phase dépassent une limite de déviation fixée.

**12.** Servo commande selon la revendication 1, caractérisée en ce que pour n parties d'un enroulement de phase il y a sur les n étages de puissance des redresseurs impulsionnels, une commande avec des impulsions qui sont déphasées chaque fois de pratiquement de 1 énième de 360°.

**13.** Servo commande selon l'une des revendications 1 ou 12, caractérisée en ce que les redresseurs impulsionnels sont commandés avec une modulation de largeur d'impulsion selon le procédé de sous-modulation et par inversion du signal de référence du comparateur (50) on assure un déphasage des impulsions de redresseurs (53 ; 55) entre les impulsions destinées aux parties d'un enroulement de phase par inversion du signal de référence du comparateur (50).

**14.** Servo commande selon l'une des revendications 1 ou 12, caractérisée en ce qu'on déphase les impulsions de redresseurs pour les parties d'un enroulement de phase par temporisation (T/2) des signaux de commande (53) par des circuits de temporisation analogiques, des compteurs numériques ou des registres à décalage.

**15.** Servo commande selon l'une des revendications 1 ou 12 à 14, caractérisée en ce que le déphasage des impulsions de redresseurs est choisi pour réduire un maximum de rayonnement parasite de haute fréquence réagissant sur l'entrée de puissance et/ou en déplaçant ce rayonnement dans une plage de fréquences dans laquelle ce rayonnement gêne moins ou peut s'éliminer plus facilement par des filtres.

**16.** Servo commande selon l'une des revendications 1 à 15, caractérisée en ce qu'il s'agit d'un moteur commandé dans quatre cadrans, dans toute la plage de la vitesse de rotation, avec réaction rapide, grande puissance, notamment pour l'entraînement de la vis mère de machines-outils à commande numérique.

Fig. 1

Fig. 2

Fig. 3

Fig. 4a

Fig. 4b

Fig. 5a

Fig. 5b

Fig.5c

Fig. 5d

53+55*(Fig. 5b* ⎍ *+ Fig. 5d* ⎍*)*